# EUROPÄISCHE PATENTSCHRIFT

(11) **EP 1 964 298 B1**
(45) Veröffentlichungstag und Bekanntmachung des Hinweises auf die Patenterteilung: **02.11.2011**
(21) Anmeldenummer: 06828629.3
(22) Anmeldetag: 08.12.2006
(51) Int. Cl.: H04J 14/02, H04B 10/08, H04B 10/155

(54) **VERFAHREN UND VORRICHTUNG ZUR KANALANGEPASSTEN SIGNALÜBERTRAGUNG IN OPTISCHEN NETZEN**
METHOD AND DEVICE FOR CHANNEL-ADAPTED SIGNAL TRANSMISSION IN OPTICAL NETWORKS
PROCEDE ET DISPOSITIF DE TRANSMISSION DE SIGNAUX ADAPTEE A UN CANAL DANS DES RESEAUX OPTIQUES

(30) Priorität: 16.12.2005 DE 102005060256
(43) Veröffentlichungstag der Anmeldung: 03.09.2008
(73) Patentinhaber: Deutsche Telekom AG, 53113 Bonn (DE)
(72) Erfinder: VORBECK, Sascha, 64347 Griesheim (DE); LEPPLA, Ralph, 64285 Darmstadt (DE); SCHNEIDERS, Malte, 64289 Darmstadt (DE); GUNKEL, Matthias, 64291 Darmstadt (DE); WEIERSHAUSEN, Werner, 64859 Eppertshausen (DE)
(86) Internationale Anmeldenummer: PCT/DE2006/002179
(87) Internationale Veröffentlichungsnummer: WO 2007/076767

(56) Entgegenhaltungen:
- WO-A-02/071670
- WO-A-03/088542
- US-A1- 2004 037 569

## Beschreibung

Die Erfindung betrifft allgemein optische Datenübertragungssysteme, und insbesondere ein Wellenlängenmultiplexsystem sowie ein Verfahren zur optischen Datenübertragung in einem solchen System.

In heutigen optischen Übertragungsnetzen werden Daten über optische Kanäle mit Kanaldatenraten von bis zu 40 Gbit/s übertragen. Zur Erhöhung der Übertragungskapazität werden auf einer Glasfaser nicht nur ein, sondern eine Vielzahl von Kanälen im Wellenlängenmultiplex übertragen. Aus DE 699 04 805 T2 ist beispielsweise ein Wellenlängenmultiplexsystem bekannt, die das Multiplexen und Demultiplexen von bis zu 32 Wellenlängenkanälen im bevorzugten Wellenlängenbereich von 1535 - 1565 nm (C-Band) erlaubt, wobei die Kanäle um 0,4 nm voneinander getrennt sind. In heutigen 10 Gbit/s-Systemen werden im C-Band teilweise sogar bis zu 80 Kanäle übertragen.

Sender für solche Systeme in Form von Sendelasern sind sowohl mit festgelegter Wellenlänge, als auch mit variabler Wellenlänge als durchstimmbare Laser kommerziell verfügbar. Die Einprägung der Daten auf den Sendelaser mittels Modulation erfolgt nach Erzeugung der optischen Welle mit Hilfe von externen Modulatoren. Die Datenrate wird hierbei nur durch die Datenrate des zugeführten Signals zum Modulator (client-Signal) und eine baulich bedingte maximale Datenrate des Modulator bestimmt und ist somit variabel. In der Regel sind die Datenraten jedoch festgelegt und werden nicht variiert. Zur Separation der einzelnen Datenkanäle am Empfänger werden optische Filter verwendet, welche den gewünschten Kanal transmittieren und alle anderen Kanäle herausfiltern. Die Filter können entsprechend den Sendelasern entweder schon bei der Produktion auf eine Wellenlänge festgelegt werden oder durchstimmbar ausgeführt werden. Alle Übertragungskanäle werden am Sender auf eine Wellenlänge festgelegt und behalten diese bis zum Empfänger bei. Eine Wellenlängenkonversion zwischen der Nachrichtenquelle und -senke findet nicht statt.

Aus US 2004/0 37 569 A1 ist ein System und ein Verfahren zur Verbesserung der Übertragungsqualität in einem Wellenlängenmultiplexsystem bekannt, bei welchem am Empfänger für jeden Übertragungskanal die Bitfehlerrate ermittelt und jeweils zu einer im Sender angeordneten Regeleinheit zurück übertragen wird, wobei zur Ermittlung der Bitfehlerrate das in dem jeweiligen Kanal übertragene Signal vorzugsweise mit einer FEC-Kodierung versehen wird, die auf der Empfängerseite ausgewertet wird, und wobei in Abhängigkeit der ermittelten Bitfehlerrate durch die Regeleinheit ein Parameter des jeweiligen Übertragungskanals eingestellt wird.

Aus WO 03/088 542 A ist ein Wellenlängenmultiplexsystem bekannt, bei welchem für jeden Übertragungskanal empfängerseitig eine unkorrigierte Bitfehlerrate ermittelt wird und in Abhängigkeit davon senderseitig mittels eines Steuermoduls die Leistung der Übertragungskanäle angepasst wird, wobei jedem Übertragungskanal eine Priorität zugewiesen wird, so dass Daten hoher Priorität über bestimmte zugewiesene Übertragungskanäle übertragen werden, wobei diese Zuordnung bei Einrichten des Systems im Steuermodul hinterlegt wird. Wird ein Anstieg der Bitfehlerrate eines Übertragungskanals erkannt, so kann dies durch Erhöhen der jeweiligen Leistung kompensiert werden. Da jedoch typischerweise eine maximale Gesamtleistung des Systems vorgegeben ist, sieht das Verfahren zur Bereitstellung zusätzlicher Sendeleistung für hoch priorisierte Übertragungskanäle vor, die Übertragungsrate niedriger priorisierter Übertragungskanäle zu reduzieren oder diese gänzlich zu deaktivieren.

In WO 02/071 670 A wird ein Wellenlängenmultiplexsystem beschrieben, bei welchem die Parameter der einzelnen Übertragungskanäle in Abhängigkeit einer ermittelten Übertragungsqualität des jeweiligen Übertragungskanals eingestellt werden können, um eine für den jeweiligen Übertragungskanal vorgegebene Übertragungsgüte zu gewährleisten. Zu diesem Zweck wird zunächst für wenigstens einen Übertragungskanal eine Priorität bzw. ein QoS-Wert vorgegeben und daraus der im wesentlichen reziproke Wert einer für diesen Übertragungskanal maximal zulässigen Bitfehlerrate bestimmt. Empfängerseitig wird die Bitfehlerrate des entsprechenden Übertragungskanals überwacht und mit dem maximal zulässigen Wert verglichen. Sind die für den jeweiligen Übertragungskanal vorgegebenen Kriterien nicht erfüllt, erfolgt zur Einstellung der Bitfehlerrate senderseitig eine Anpassung der Datenübertragungsrate, sowie gegebenenfalls weiterer Parameter wie beispielsweise der optischen Leistung oder Dispersion des jeweiligen Übertragungskanäle.

Die physikalischen Parameter einer optischen Übertragungsstrecke variieren im Laufe der Zeit. Im allgemeinen reagieren optische Übertragungssysteme mit höheren Datenraten empfindlicher auf Variationen der Parameter des Übertragungskanals. In Abhängigkeit der äußeren Einflüsse verändern sich einige physikalische Parameter des Übertragungsmediums deterministisch und können prädiziert werden. Andere Parameter ändern sich stochastisch und können somit nicht durch vorherige Berechnungen bestimmt werden. In diesem Fall kann durch Messungen und die Werkzeuge der Stochastik lediglich der Wertebereich des Parameters bestimmt werden. Deterministische und quasistatische Veränderungen können in den Planungsprozess einbezogen werden, so dass entweder eine genügend große Toleranz des Übertragungssystems oder abgestimmte Kompensatoren zur Verfügung stehen. Bei stochastischen und schnellen Änderungen müssen die Kompensatoren entsprechend schnell reagieren und möglicherweise über einen großen Werte- bzw. Einstellungsbereich verfügen. Sowohl die Anforderung schneller Reaktionszeiten, als auch die großer Einstellungsbereiche führt zu einer erheblichen Kostenerhöhung entsprechender Systeme. So sind zum Beispiel für den physikalischen Effekt der Polarisationsmodendispersion entsprechende PMD-Kompensatoren zwar technisch machbar, der tatsächliche Einsatz wird jedoch aufgrund mangelnder Kosteneffizienz verhindert.

Der Erfindung liegt daher die Aufgabe zugrunde, einen Weg aufzuzeigen, wie die Übertragungsqualität eines Wellenlängenmultiplexsystems erhöht werden kann, insbesondere ohne adaptive Kompensation stochastischer Schwankungen physikalischer Parameter der optischen Übertragungsstrecke. Ferner liegt der Erfindung die weitere Aufgabe zugrunde, die Effizienz der Bandbreitennutzung eines Wellenlängenmultiplexsystems zu erhöhen.

Diese Aufgabe wird durch ein Verfahren gemäß Anspruch 1, sowie ein Wellenlängenmultiplexsystem nach Anspruch **6** gelöst. Vorteilhafte Ausführungsformen und Weiterbildungen sind in den jeweiligen Unteransprüchen umschrieben.

Dementsprechend umfasst ein erfindungsgemäßes Verfahren zur optischen Datenübertragung in einem Wellenlängenmultiplexsystem das Ermitteln wenigstens eines Wertes, welcher ein Maß für eine physikalische Eigenschaft der optischen Übertragungsstrecke des Wellenlängenmultiplexsystems ist und das automatische Einstellen zumindest eines Übertragungsparameters wenigstens eines Übertragungskanals des Wellenlängenmultiplexsystems in Abhängigkeit des ermittelten Wertes, wobei das Wellenlängenmultiplexsystem wenigstens zwei Übertragungskanäle unterschiedlicher Wellenlänge aufweist.

Vorteilhafterweise umfasst das Wellenlängenmultiplexsystem eine Vielzahl von Übertragungskanälen unterschiedlicher Wellenlänge innerhalb einer vorgegebenen Bandbreite. Wie bereits oben erwähnt können im gebräuchlichen C-Band im Wellenlängenbereich von 1535 - 1565 nm in heutigen Systemen bis zu 80 Übertragungskanäle übertragen werden.

Der Erfindung liegt der Grundgedanke einer kanalangepassten Übertragung zugrunde. Anhand ermittelter Parameter der optischen Übertragungsstrecke, insbesondere des Übertragungsmediums, erfolgt eine Parameteranpassung der Übertragungskanäle. Dadurch werden kostenintensive adaptive Kompensationen sich stochastisch verändernder physikalischer Eigenschaften des Übertragungsmediums überflüssig oder aufgrund geringerer Anforderungen einfacher und billiger realisierbar.

Erfindungsgemäß werden physikalische Eigenschaften der optischen Übertragungsstrecke betrachtet, welche einen Einfluss auf die Signalqualität und damit auf die Übertragungsqualität der Übertragungskanäle haben.

Dementsprechend ist der ermittelte Wert, welcher ein Maß für eine physikalische Eigenschaft der optischen Übertragungsstrecke ist, auch ein Maß für die Signal- bzw. Übertragungsqualität wenigstens eines Übertragungskanals.

Eine Möglichkeit, trotz der Parametervariationen eines Übertragungskanals eine konstant hohe Signalqualität zu gewährleisten ohne adaptiv zu kompensieren, besteht erfindungsgemäß in einer Anpassung des Senders und des Empfängers an die Eigenschaften des Übertragungskanals. Wie durch Langzeitmessungen gezeigt werden kann, unterliegt beispielsweise die differentielle Gruppenlaufzeitdifferenz (DGD) einer optischen Übertragungsstrecke aufgrund von sich ändernden Umgebungsbedingungen stochastischen Schwankungen. Die DGD-Werte, welche lediglich zu geringen Signalverschlechterungen führen und somit toleriert werden können, verhalten sich antiproportional zur Datenrate. Folglich können niedrigere Datenraten höhere DGD-Werte tolerieren und höhere Datenraten niedrigere DGD-Werte. Ein ähnliches Verhalten zeigt sich auch zum Beispiel für den optischen Signal-zu-Rauch-Abstand (OSNR; Optical signal to noise ratio), die Dispersion, die Dispersionssteigung und auch für weitere Parameter. Wird nun ein Datenkanal mit einer hohen Datenrate bei einer Wellenlänge übertragen, welche zum Zeitpunkt der Übertragung einen hohen DGD-Wert aufweist, resultiert daraus eine sehr schlechte Übertragungsqualität.

Eine erfindungsgemäße kanalangepasste Übertragung kann nun dadurch eine sehr gute Signalqualität gewährleisten, dass die Wellenlänge des Übertragungskanals soweit verändert wird, bis eine Wellenlänge mit derzeitig geringem DGD-Wert erreicht wird. Dementsprechend umfasst das automatische Einstellen der Übertragungsparameter bevorzugt das Einstellen der Wellenlänge wenigstens eines Übertragungskanals.

Eine Variante einer kanalangepassten Übertragung besteht in der Variation der Datenrate bei fester Wellenlänge. In dieser Variante wird die Datenrate eines Kanals soweit verringert, bis die Signalqualität wieder zufriedenstellend ist. Bei einer Verringerung der degradierenden Effekte erfolgt umgekehrt eine Erhöhung der Datenrate. Zu diesem Zweck ist je nach Modulationsformat ein adaptives Empfangsfilter vorgesehen. Dementsprechend umfasst das automatische Einstellen der Übertragungsparameter vorteilhaft das Einstellen der Datenübertragungsrate wenigstens eines Übertragungskanals.

Ein entsprechendes Ergebnis kann auch durch die Änderung des Modulationsformates eines Übertragungskanals erreicht werden, wobei sich das geänderte Modulationsformat robuster gegenüber der Störung durch den physikalischen Effekt verhält. Dementsprechend umfasst das automatische Einstellen der Übertragungsparameter ferner vorteilhaft das Einstellen des Modulationsformates wenigstens eines Übertragungskanals.

Das Ermitteln eines Wertes, welcher ein Maß für eine physikalische Eigenschaft der optischen Übertragungsstrecke des Wellenlängenmultiplexsystems ist, umfasst vorteilhaft das Messen einer Restdispersion, einer Restdispersionssteigung, einer differentiellen Gruppenlaufzeitdifferenz (DGD) und/oder einem optischen Signal-zu-Rausch-Abstand (OSNR) der optischen Übertragungsstrecke.

Da die physikalischen Eigenschaften der optischen Übertragungsstrecke einen Einfluss auf die Signalqualität und damit auf die Übertragungsqualität der Übertragungskanäle haben, umfasst das Ermitteln eines Wertes, welcher ein Maß für eine physikalische Eigenschaft der optischen Übertragungsstrecke ist, ferner das Messen einer Bitfehlerrate, eines Q-Faktors, der Öffnung eines Augendiagramms und/oder eines Polarisationsgrades.

Für den Fall, dass im obigen Beispiel der Wellenlängenanpassung eines Übertragungskanals in Abhängigkeit der ermittelten differentiellen Gruppenlaufzeitdifferenz die zur Verfügung stehende Übertragungsbandbreite schon sehr stark mit Übertragungskanälen besetzt ist, werden erfindungsgemäß die Kanäle mit geringer Datenrate auf den Wellenlängen mit den höchsten DGD-Werten und die Kanäle mit hoher Datenrate auf den Wellenlängen mit geringen DGD-Werten übertragen.

Dementsprechend umfasst das erfindungsgemäße Verfahren das Bereitstellen wenigstens zweier Datenkanäle vorgegebener Datenrate, das Bestimmen wenigstens zweier Werte, welche jeweils ein Maß für die physikalische Eigenschaft der optischen Übertragungsstrecke bei der Wellenlänge wenigstens zweier Übertragungskanäle sind, das Ermitteln der erwarteten Übertragungsqualität der wenigstens zwei Übertragungskanäle in Abhängigkeit der bestimmten Werte, und das Zuordnen der Datenkanäle zu den Übertragungskanälen mit absteigender Datenrate der Datenkanäle und absteigender Übertragungsqualität der Übertragungskanäle, beginnend mit dem Datenkanal höchster Datenrate und dem Übertragungskanal höchster Übertragungsqualität, wobei die physikalische Eigenschaft der optischen Übertragungsstrecke wellenlängenabhängig ist und die Übertragungsqualität eines Übertragungskanals durch die physikalische Eigenschaft der optischen Übertragungsstrecke bei der Wellenlänge des Übertragungskanals bestimmt wird. Besonders vorteilhaft sind eine Vielzahl von Datenkanälen und eine Vielzahl von Übertragungskanälen vorgesehen, wobei die Anzahl der Übertragungskanäle größer oder gleich der Anzahl der Datenkanäle ist. Entsprechendes kann durch Variation der Datenrate und des Modulationsformates erreicht werden. Besonders durch eine kombinierte Variation der Wellenlänge, der Datenrate und/oder des Modulationsformates kann eine optimierte Signalqualität über alle Übertragungskanäle erreicht werden. Außerdem wird durch eine erfindungsgemäße Anpassung der spektralen Kanalbelegung die Effizienz der Bandbreitennutzung erhöht.

Ein erfindungsgemäßes Wellenlängenmultiplexsystem zur optischen Datenübertragung mit wenigstens zwei Übertragungskanälen unterschiedlicher Wellenlänge, wobei eine physikalische Eigenschaft der optischen Übertragungskanäle wellenlängenabhängig ist und die Übertragungsqualität der Übertragungskanäle wellenlängenabhängig ist, umfasst einen steuerbaren Sender zur Erzeugung eines optischen Signals, einen steuerbaren Empfänger zum Empfangen des optischen Signals, wobei der steuerbare Sender über die optischen Übertragungskanäle mit dem steuerbaren Empfänger verbunden ist, ein Überwachungsmittel zum Bestimmen mehrerer Wertes, welche jeweils ein Maß für die physikalische Eigenschaft einer der optischen Übertragungskanäle bei der Wellenlänge des einen Übertragungskanals ist, und eine Steuereinheit zum Steuern des Senders und des Empfängers, wobei die Steuereinheit mit dem Sender, dem Empfänger und dem Überwachungsmittel verbunden ist, wobei die Steuereinheit zum Bereitstellen wenigstens zweier Datenkanäle vorgegebener Datenrate, zum Ermitteln der erwarteten Übertragungsqualität der Übertragungskanäle in Abhängigkeit des bestimmten Wertes des jeweiligen Übertragungskanals, zum automatischen Einstellen der Übertragungsparameter der Übertragungskanäle in Abhängigkeit des bestimmten Wertes des jeweiligen Übertragungskanals, und zum Zuordnen der Datenkanäle zu den Übertragungskanälen mit absteigender Datenrate der Datenkanäle und absteigender Übertragungsqualität der Übertragungskanäle, beginnend mit dem Datenkanal höchster Datenrate und dem Übertragungskanal höchster Übertragungsqualität, ausgebildet ist.

Dementsprechend sind die Sender und Empfänger bevorzugt zur Datenübertragung über wenigstens zwei Übertragungskanäle unterschiedlicher Wellenlänge ausgebildet. Besonders vorteilhaft sind die Wellenlänge, die Datenübertragungsrate und/oder das Modulationsformat jedes Übertragungskanals separat über die Steuereinheit steuerbar.

Zu diesem Zweck umfasst der Sender vorteilhaft für jeden Übertragungskanal entsprechende, separat steuerbare Sendeeinheiten, wobei jede Sendeeinheit vorzugsweise einen Sendelaser zur Erzeugung eines optischen Signals und einen Modulator zum Einprägen der Daten eines Datenkanals aufweist. Die Sendeeinheiten sind dabei so ausgebildet, dass die Wellenlänge des Sendelasers, das Modulationsformat des Modulators und/oder die Datenübertragungsrate des Datenkanals automatisch variiert werden kann. Analog umfasst der Empfänger für jeden Übertragungskanal entsprechende, separat steuerbare Empfangseinheiten, wobei jede Empfangseinheit ein optisches Filter zur Selektion einer Wellenlänge sowie einen Demodulator umfasst.

Für die Entscheidung, ob eine Variation der Kanalwellenlänge, der Kanaldatenrate oder des Modulationsformates des Kanals zu einer optimalen Übertragungsqualität aller Kanäle führt, werden besonders vorteilhaft sowohl die aktuellen Werte des Übertragungsmediums als auch die aktuelle Signalqualität der Übertragungskanäle ermittelt. Zur Messung der Eigenschaftsparameter des Übertragungsmediums in Abhängigkeit der Wellenlänge ist vorzugsweise eine Fasermonitor vorgesehen. Für die Beurteilung der Signalqualität eignen sich verschiedene Parameter, welche durch einen Signalmonitor überwacht werden können.

Dementsprechend umfasst das Überwachungsmittel vorteilhaft einen Fasermonitor zur Bestimmung der Restdispersion, der Restdispersionssteigung, der differentiellen Gruppenlaufzeitdifferenz (DGD) und/oder des optischen Signal-zu-Rausch-Abstands (OSNR) einer vorzugsweise für die optische Übertragungsstrecke eingesetzten optischen Faser.' Ferner umfasst das Überwachungsmittel vorteilhaft einen Signalmonitor zur Bestimmung einer Bitfehlerrate, eines Q-Faktors, der Öffnung eines Augendiagramms und/oder eines Polarisationsgrades.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig. 1: eine schematische Darstellung eines Senders eines Wellenlängenmultiplexsystems mit vier Sendeeinheiten,
- Fig. 2a: eine schematische Darstellung einer Ausführungsform einer Sendeeinheit mit variabler Wellenlänge,
- Fig. 2b: eine schematische Darstellung einer Ausführungsform einer Sendeeinheit mit variabler Datenrate,
- Fig. 2c: eine schematische Darstellung einer Ausführungsform einer Sendeeinheit mit variabler Wellenlänge und variabler Datenrate,
- Fig.: 2d eine schematische Darstellung einer Ausführungsform einer Sendeeinheit mit variabler Wellenlänge, variabler Datenrate und variablem Modulationsformat,
- Fig. 3: eine schematische Darstellung einer Ausführungsform eines Empfängers eines Wellenlängenmultiplexsystems mit vier Empfangseinheiten, und
- Fig. 4: eine schematische Darstellung einer erfindungsgemäßen Ausführungsform eines Wellenlängenmultiplexsystems.

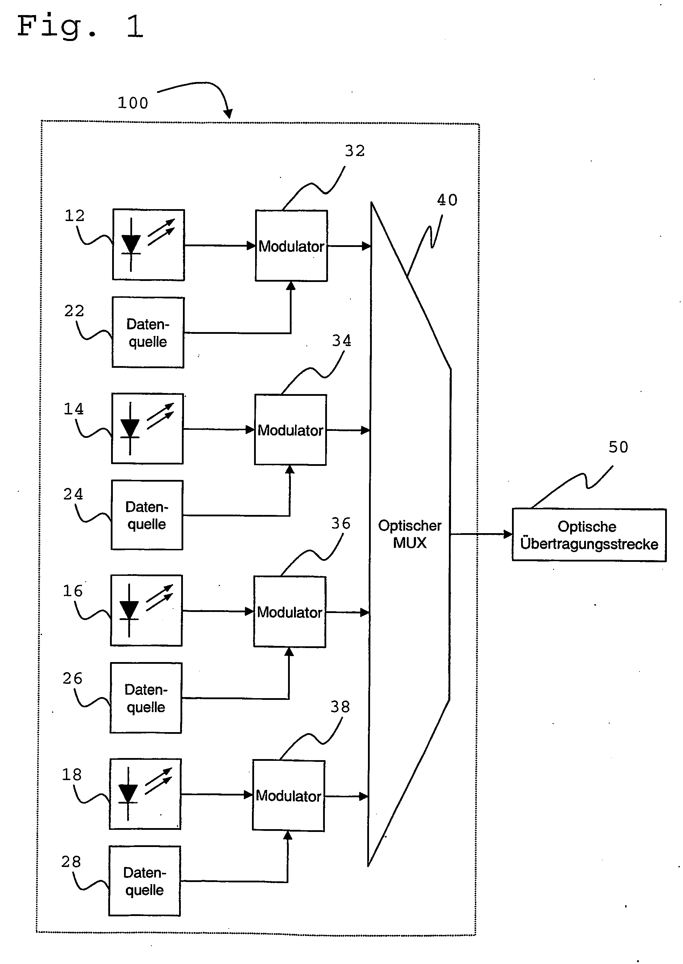

Fig. 1 zeigt schematisch den prinzipiellen Aufbau eines Senders 100 eines Wellenlängenmultiplexsystems. In der dargestellten Ausführungsform weist der Sender 100 vier Sendeeinheiten auf, wobei die Sendeeinheiten jeweils einen Sendelaser 12, 14, 16 bzw. 18 zur Erzeugung eines optischen Signals mit einer Wellenlänge innerhalb einer vorgegebenen Bandbreite, beispielsweise innerhalb des C-Bandes zwischen 1535 und 1565 nm, umfassen. Nach dem Stand der Technik werden die Sendelaser 12, 14, 16 und 18 vor Beginn der Datenübertragung fest auf eine Wellenlänge eingestellt, wobei sich die Wellenklängen der Sendelaser 12, 14, 16 und 18 jeweils voneinander unterscheiden. Ferner umfassen die Sendeeinheiten jeweils einen Modulator 32, 34, 36 bzw. 38, zum Einprägen von Daten, welche jeweils über Datenquellen 22, 24, 26 bzw. 28 mit vorgegebener Datenrate bereitgestellt werden, auf das optische Ausgangssignal des jeweiligen Sendelasers 12, 14, 16 bzw. 18.

Die modulierten optischen Ausgangssignale der Modulatoren 32, 34, 36 und 38 werden mit Hilfe eines optischen Multiplexers 40 zu einem optischen Signal zusammengefasst und über die optische Übertragungsstrecke 50 zu einem Empfänger übertragen.

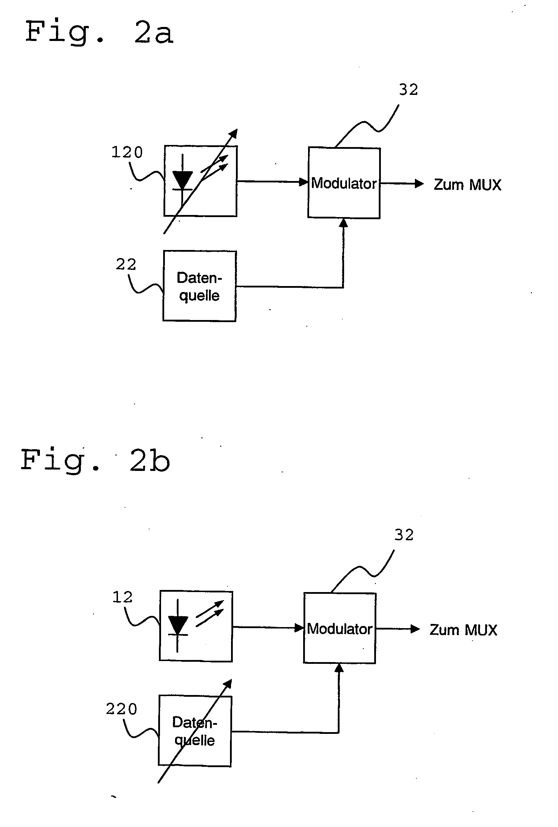

Da die physikalischen Eigenschaften der optischen Übertragungsstrecke 50 nicht konstant sind, sondern sich zeitlich in bisweilen schnellen Zyklen ändern, wird eine kanalangepasste Übertragung durchgeführt. Die Fig. 2a bis 2d zeigen verschiedene Varianten der Kanalanpassung, welche für jeden Übertragungskanal individuell erfolgen kann.

Zur automatischen Variation der Wellenlänge eines Übertragungskanals umfasst die Sendeeinheit einen automatisch abstimmbaren Sendelaser 120, wie in Fig. 2a dargestellt. In einer anderen Variante wird die Datenrate des Übertragungskanals an die Eigenschaften der Übertragungsstrecke angepasst. Zu diesem Zweck umfasst die Sendeeinheit eine Datenquelle 220 mit entsprechend regelbarer Datenübertragungsrate. Eine erfindungsgemäße Kanalanpassung kann in einer weiteren Variante auch durch Variation des Modulationsformates des Modulators erreicht werden. Abhängig von dem Einsatzzweck, der Einsatzumgebung und anderen Randparametern kann bei der Kanalanpassung die Variation der Wellenlänge, der Datenrate und des Modulationsformates beliebig kombiniert werden.

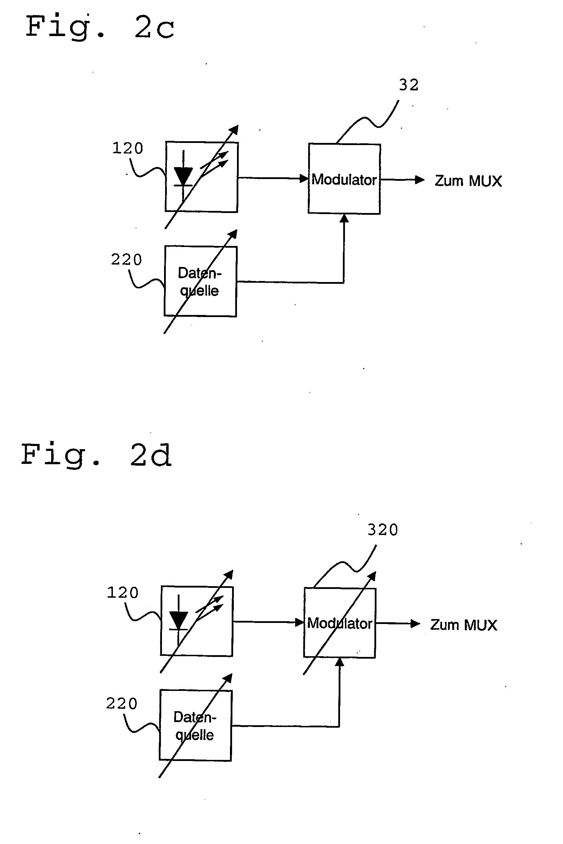

Fig. 2c zeigt dementsprechend eine Ausführungsform, bei der in der Sendeeinheit sowohl ein abstimmbarer Sendelaser 120 zur Variation der Wellenlänge als auch eine Datenquelle 220 mit steuerbarer Datenübertragungsrate vorgesehen ist. In Fig. 2d ist in der Sendeeinheit zusätzlich ein steuerbarer Modulator 320 vorgesehen, bei welchem das verwendete Modulationsformat automatisch geändert werden kann.

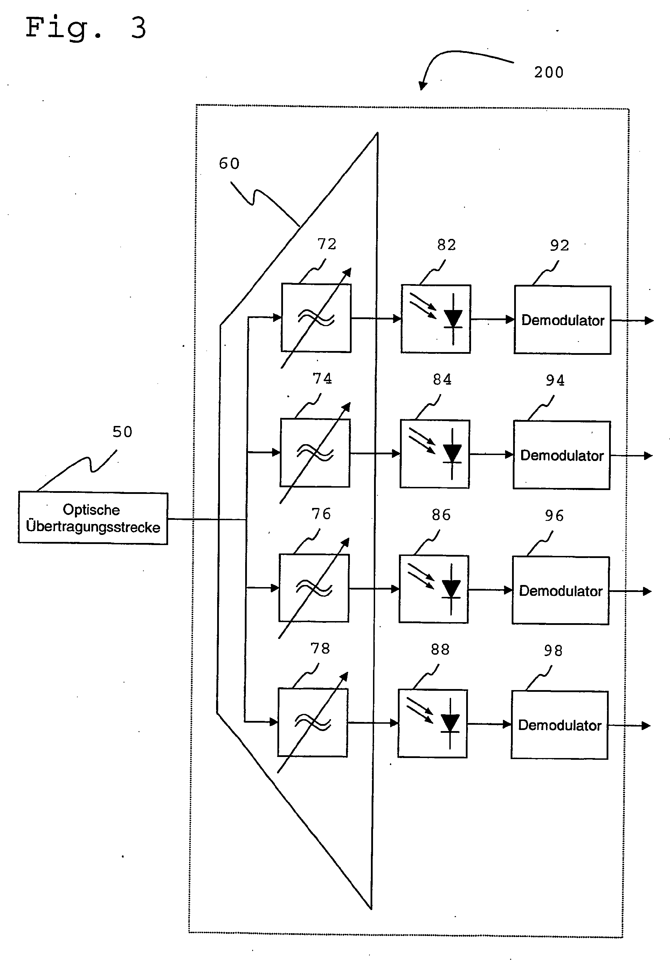

Zum Empfang eines Signals von einem Sender, welcher eine erfindungsgemäße Kanalanpassung aufweist, ist ein entsprechender, in Fig. 3 dargestellter steuerbarer Empfänger 200 vorgesehen. Der Empfänger 200, welcher über die optische Übertragungsstrecke 50 ein optisches Signal empfängt, umfasst einen optischen Demultiplexer 60, welcher für jeden Übertragungskanal jeweils ein abstimmbares optisches Filter 72, 74, 76 bzw. 78 umfasst. Die dargestellte Ausführungsform zeigt einen korrespondierenden Empfänger für einen Sender mit Sendeeinheiten gemäß Fig. 2c. Dementsprechend sind die optischen Filter 72, 74, 76 bzw. 78 automatisch abstimmbar, so dass jeweils die beim jeweiligen steuerbaren Sendelaser 120 des Senders eingestellte Wellenlänge selektiert wird. Mittels optischer Sensoren 82, 84, 86 bzw. 88 werden die optischen Signale der selektierten Wellenlänge in elektrische Signale umgewandelt und mit Hilfe der Demodulatoren 92, 94, 96 bzw. 98 demoduliert. Für die oben beschriebenen weiteren Sendervarianten sind die entsprechenden Komponenten des Empfängers, insbesondere die Demodulatoren 92, 94, 96 bzw. 98 ebenfalls steuerbar ausgelegt.

Durch eine erfindungsgemäße kanalangepasste Übertragung kann die Signalqualität beispielsweise bei Variationen der Dispersion und der Dispersionssteigung optimiert werden. Die beiden Parameter der Dispersion und der Dispersionssteigung unterliegen temperaturbedingten Schwankungen. Die Temperaturänderungen des Bodens sind dabei für die Parametervariation der Übertragungsfasern und die Temperaturschwankungen in den Betriebsstellen des Netzbetreibers für die Parametervariation der dispersionskompensierenden Fasern verantwortlich. Die Verminderung der Signaldegradation aufgrund der Variation der Dispersion ist in der Regel ausschließlich durch die Verringerung der Datenrate möglich. Die Dispersionssteigung führt zu einem wellenlängenabhängigen Dispersionsparameter. Folglich erfahren nicht alle Kanäle die gleiche Dispersion. Bei Variation der Dispersionssteigung variiert folglich die Wellenlängenabhängigkeit des Dispersionsparameters. Durch einen wellenlängenadaptiven Sender und Empfänger ist es möglich, Kanäle mit geringer Dispersionstoleranz in einen Wellenlängenbereich zu verlegen, welcher eine geringe Restdispersion aufweist. Eine weiter Optimierungsmöglichkeit bietet sich bei der Signalleistung und dem Signal-zu-Rausch-Verhältnis (OSNR). Optische Verstärker zeigen keine konstante Verstärkung und Rauschakkumulation über den gesamten Wellenlängenbereich. Folglich stellt sich ein wellenlängenabhängiges OSNR über das Übertragungsband ein. Für eine konstant hohe Signalqualität benötigen Kanäle mit hohen Datenraten ein hohes OSNR. Für Kanäle mit geringerer Datenrate ist auch ein geringeres OSNR ausreichend. Somit kann erfindungsgemäß durch einen kanalangepassten Sender und Empfänger die Signalqualität dadurch optimiert werden, dass entweder die Kanäle mit den hohen Datenraten in die Bereiche mit hohem OSNR verschoben werden, bzw. die Datenraten an den OSNR-Wert angepasst werden. Das gleiche Ergebnis kann auch durch die Änderung des Modulationsformates erreicht werden.

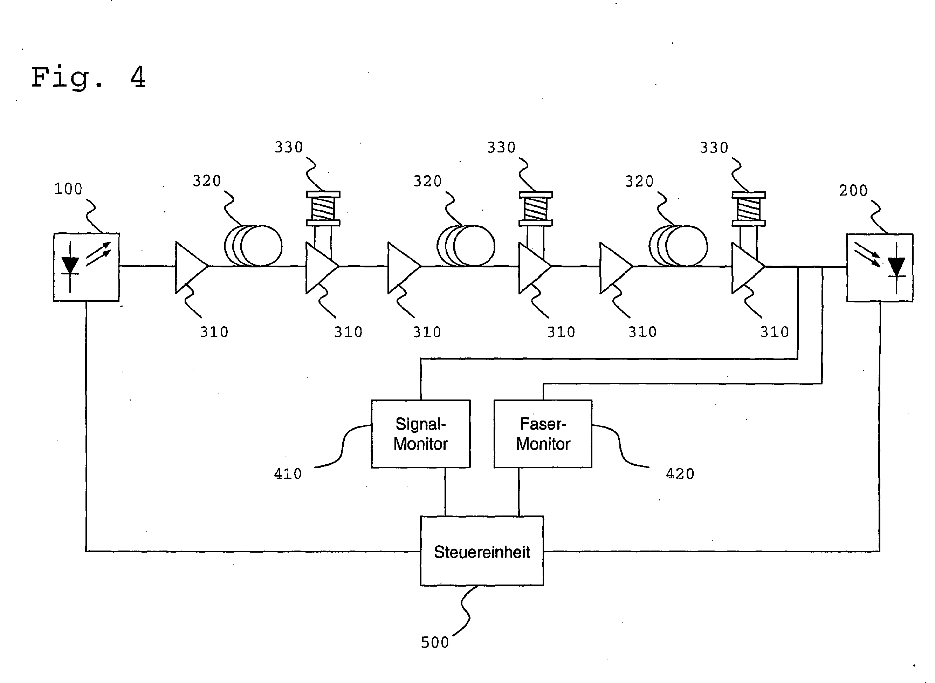

Fig. 4 zeigt ein erfindungsgemäßes Wellenlängenmultiplexsystem mit einem steuerbaren Sender 100 und einem steuerbaren Empfänger 200, wobei der Sender 100 steuerbare Sendeeinheiten umfasst, wie sie beispielhaft in den Fig. 2a bis 2d dargestellt sind. Der Empfänger 200 umfasst entsprechende Empfangseinheiten.

Sender 100 und Empfänger 200 sind über eine optische Übertragungsstrecke miteinander verbunden, welche in der dargestellten Ausführungsform drei Segmente umfasst, die jeweils zwei Verstärker 310, eine zwischen den Verstärkern 310 angeordnete Übertragungsfaser 320, sowie jeweils eine dispersionskompensierende Faser 330 aufweisen.

Ferner umfasst das System einen Signalmonitor 410 zur Überwachung der Signalqualität der Übertragungskanäle, beispielsweise durch Messung einer Bitfehlerrate, eines Q-Faktors, der Öffnung eines Augendiagramms und/oder eines Polarisationsgrades und einen Fasermonitor 420 zur Messung der Parameter des Übertragungsmediums, wie beispielsweise Restdispersion, Restdispersionssteigung, differentielle Gruppenlaufzeitdifferenz (DGD) und/oder optischer Signal-zu-Rausch-Abstand (OSNR). In Fig. 4 greifen Signal- und Fasermonitor 410 und 420 am Ende der Übertragungsstrecke an. Je nach Ausgestaltung der Erfindung können Signal- und Fasermonitor 410 und 420 aber auch an jedem anderen Punkt des Systems angreifen.

Anhand der gemessenen Werte des Faser- und Signalmonitors passt ein intelligenter Regler in Form der Steuereinheit 500 die Parameter Wellenlänge, Datenrate und/oder Modulationsformat der Übertragungskanäle an und überwacht die Verbesserung der Signalqualität der einzelnen Kanäle.

Das beschriebene erfindungsgemäße Wellenlängenmultiplexsystem ist ein sowohl sehr flexibles als auch komplexes System. Dementsprechend umfasst die Steuereinheit 500 vorteilhaft einen Mikroprozessor sowie eine Speichereinheit zum Speichern der von den Signal- und Fasermonitoren 410 und 420 gemessenen Werte, sowie zum Bereitstellen eines entsprechenden Steuerprogrammes.

## Patentansprüche

1. Verfahren zur optischen Datenübertragung in einem Wellenlängenmultiplexsystem mit Übertragungskanälen unterschiedlicher Wellenlänge, wobei eine physikalische Eigenschaft der optischen Übertragungskanäle wellenlängenabhängig ist und die Übertragungsqualität der Übertragungskanäle wellenlängenabhängig ist, mit den Schritten:
Bereitstellen mehrerer Datenkanäle vorgegebener Datenrate, Bestimmen von Werten, wobei jeder Wert ein Maß für die physikalische Eigenschaft eines der Übertragungskanäle bei der Wellenlänge des einen Übertragungskanals ist,
Ermitteln der erwarteten Übertragungsqualität jedes der Übertragungskanäle in Abhängigkeit des bestimmten Wertes des jeweiligen Übertragungskanals,
in Abhängigkeit des bestimmten Wertes des jeweiligen Übertragungskanals automatisches Einstellen der Übertragungsparameter der Übertragungskanäle, **und gekennzeichnet, durch** Zuordnen der Datenkanäle zu den Übertragungskanälen mit absteigender Datenrate der Datenkanäle und absteigender Übertragungsqualität der Übertragungskanäle, beginnend mit dem Datenkanal höchster Datenrate und dem Übertragungskanal höchster Übertragungsqualität.

2. Verfahren nach einem der vorstehenden Ansprüche, wobei das automatische Einstellen der Übertragungsparameter das Einstellen des Modulationsformates wenigstens eines Übertragungskanals umfasst.

3. Verfahren nach einem der vorstehenden Ansprüche, wobei das Bestimmen eines der Werte das Messen einer Restdispersion, einer Restdispersionssteigung, einer differentiellen Gruppenlaufzeitdifferenz (DGD) und/oder einem optischen Signal-zu-Rausch-Abstand (OSNR) der optischen Übertragungsstrecke umfasst.

4. Verfahren nach einem der vorstehenden Ansprüche, wobei das Bestimmen eines der Werte das Messen einer Bitfehlerrate, eines Q-Faktors, der Öffnung eines Augendiagramms und/oder eines Polarisationsgrades umfasst.

5. Verfahren nach Anspruch 1, wobei eine Vielzahl von Datenkanälen und eine Vielzahl von Übertragungskanälen vorgesehen sind, wobei die Anzahl der Übertragungskanäle größer oder gleich der Anzahl der Datenkanäle ist.

6. Wellenlängenmultiplexsystem zur optischen Datenübertragung mit mehreren Übertragungskanälen unterschiedlicher Wellenlänge, wobei eine physikalische Eigenschaft der optischen Übertragungskanäle wellenlängenabhängig ist und die Übertragungsqualität der Übertragungskanäle wellenlängenabhängig ist, umfassend einen steuerbaren Sender **(100)** zur Erzeugung eines optischen Signals, **einen** steuerbaren Empfänger **(200)** zum Empfangen des optischen Signals, **wobei der steuerbare Sender (100) über die optischen Übertragungskanäle mit dem steuerbaren Empfänger (200)** verbunden ist,
Überwachungsmittel **(410, 420)** zum Bestimmen mehrerer Werte, welche jeweils ein Maß für die physikalische Eigenschaft einer der optischen Übertragungskanäle bei der Wellenlänge des einen Übertragungskanals ist, und eine Steuereinheit **(500)** zum Steuern des Senders **(100)** und des Empfängers **(200),** wobei die Steuereinheit **(500)** mit dem Sender **(100),** dem Empfänger **(200)** und dem
Überwachungsmittel **(410, 420)** verbunden ist, wobei die Steuereinheit **(500)** ausgebildet ist zum:
Bereitstellen wenigstens zweier Datenkanäle vorgegebener Datenrate,
Ermitteln der erwarteten Übertragungsqualität der Übertragungskanäle in Abhängigkeit des bestimmten Wertes des jeweiligen Übertragungskanals,
**automatischen Einstellen der Übertragungsparameter der Übertragungskanäle in Abhängigkeit des bestimmten Wertes des jeweiligen Übertragungskanals,** und
Zuordnen der Datenkanäle zu den Übertragungskanälen mit absteigender Datenrate der Datenkanäle und absteigender Übertragungsqualität der Übertragungskanäle, beginnend mit dem Datenkanal höchster Datenrate und dem
Übertragungskanal höchster Übertragungsqualität.

7. System nach Anspruch 6, wobei der optische Übertragungskanal eine optische Faser **(320)** aufweist und das Überwachungsmittel einen Fasermonitor **(420)** zur Bestimmung der Restdispersion, der Restdispersionssteigung, der differentiellen Gruppenlaufzeitdifferenz (DGD) und/oder des optischen Signal-zu-Rausch-Abstands (OSNR) der optischen Faser umfasst.

8. System nach Anspruch 6, wobei das Überwachungsmittel einen Signalmonitor **(410)** zur Bestimmung einer Bitfehlerrate, eines Q-Faktors, der Öffnung eines Augendiagramms und/oder eines Polarisationsgrades umfasst.

9. System nach Anspruch 6, wobei die Steuereinheit **(500)** einen Mikroprozessor und eine Speichereinheit umfasst.

## Claims

1. Method for optical data transmission in a wavelength division multiplexing system with transmission channels of different wavelengths, wherein a physical property of the optical transmission channels is wavelength-dependent and the transmission quality of the transmission channels is wavelength-dependent, having the steps:
provision of multiple data channels of predetermined data rate,
determination of values, wherein each value is a measure for the physical property of one of the transmission channels at the wavelength of the one transmission channel,
ascertaining the anticipated transmission quality of each of the transmission channels as a function of the value that was determined of the applicable transmission channel,
automatically setting the transmission parameters of the transmission channels as a function of the value that was determined of the applicable transmission channel, and **characterized by**
assignment of the data channels to the transmission channels with descending data rates of the data channels and descending transmission quality of the transmission channels, starting with the data channel of the highest data rate and the transmission channel of the highest transmission quality.

2. Method according to any one of the preceding claims, wherein the automatic setting of the transmission parameters comprises the setting of the modulation format of at least one transmission channel.

3. Method according to any one of the preceding claims, wherein the determining of one of the values comprises the measurement of a residual dispersion, of a slope of a residual dispersion, of a differential group delay difference (DGD), and/or of an optical signal-to-noise ratio (OSNR) of the optical transmission path.

4. Method according to any one of the preceding claims, wherein the determining of one of the values comprises the measurement of a bit error rate, of a Q factor, of the opening of an eye pattern, and/or of a degree of polarization.

5. Method according to claim 1, wherein a plurality of data channels and a plurality of transmission channels are provided, wherein the number of transmission channels is greater than or equal to the number of data channels.

6. Wavelength division multiplexing system for optical data transmission with multiple transmission channels of different wavelengths, wherein a physical property of the optical transmission channels is wavelength-dependent and the transmission quality of the transmission channels is wavelength-dependent, comprising a controllable transmitter (100) for generating an optical signal, a controllable receiver (200) for receiving the optical signal, wherein the controllable transmitter (100) is connected to the controllable receiver (200) through the optical transmission channels,
monitoring means (410, 420) for determining multiple values, each of which is a measure for the physical property of one of the transmission channels at the wavelength of the one transmission channel, and
a control unit (500) for controlling the transmitter (100) and the receiver (200), wherein the control unit (500) is connected to the transmitter (100), to the receiver (200), and to the monitoring means (410, 420), wherein the control unit (500) is designed to:
provide at least two data channels of predetermined data rate,
ascertain the anticipated transmission quality of the transmission channels as a function of the value determined for the applicable transmission channel,
automatically set the transmission parameters of the transmission channels as a function of the value determined for the applicable transmission channel, and
assign the data channels to the transmission channels with descending data rates of the data channels and descending transmission quality of the transmission channels, starting with the data channel of the highest data rate and the transmission channel of the highest transmission quality.

7. System according to claim 6, wherein the optical transmission channel has an optical fiber (320) and the monitoring means comprises a fiber monitor (420) for determining the residual dispersion, the slope of the residual dispersion, the differential group delay difference (DGD), and/or the optical signal-to-noise ratio (OSNR) of the optical fiber.

8. System according to claim 6, wherein the monitoring means comprises a signal monitor (410) for determining a bit error rate, a Q factor, the opening of an eye pattern, and/or a degree of polarization.

9. System according to claim 6, wherein the control unit (500) comprises a microprocessor and a memory unit.

## Revendications

1. Procédé de transmission optique de données dans un système de multiplexage en longueur d'onde avec canaux de transmission de longueur d'onde différente, une propriété physique des canaux de transmission optique étant fonction de la longueur d'onde et la qualité de transmission des canaux de transmission étant fonction de la longueur d'onde, comprenant les étapes :
- fourniture de plusieurs canaux de données à débit de données prédéterminé,
- détermination de valeurs, chaque valeur étant une mesure pour la propriété physique de l'un des canaux de transmission à la longueur d'onde du canal de transmission respectif,
- identification de la qualité de transmission attendue de chacun des canaux de transmission en fonction de la valeur déterminée du canal de transmission respectif,
- en fonction de la valeur déterminée du canal de transmission respectif, réglage automatique des paramètres de transmission des canaux de transmission, et
**caractérisé par**
- l'affectation des canaux de données aux canaux de transmission avec un débit de données des canaux de données décroissant et une qualité de transmission des canaux de transmission décroissante, en commençant par le canal de données ayant le débit de données le plus élevé et le canal de transmission ayant la qualité de transmission la plus élevée.

2. Procédé selon l'une des revendications précédentes, dans lequel le réglage automatique des paramètres de transmission comprend le réglage du format de modulation d'au moins un canal de transmission.

3. Procédé selon l'une des revendications précédentes, dans lequel la détermination d'une valeur comprend la mesure d'une dispersion résiduelle, d'une pente de dispersion résiduelle, du temps de propagation de groupe différentiel (DGD) et/ou d'une distance signal/bruit optique (OSNR) du trajet de transmission optique.

4. Procédé selon l'une des revendications précédentes, dans lequel la détermination de l'une des valeurs comprend la mesure d'un taux d'erreur binaire, d'un facteur Q, de l'ouverture d'un diagramme en oeil et/ou d'un degré de polarisation.

5. Procédé selon la revendication 1, dans lequel une pluralité de canaux de données et une pluralité de canaux de transmission sont prévues, le nombre des canaux de transmission étant supérieur ou égal au nombre des canaux de données.

6. Système de multiplexage en longueur d'onde pour la transmission optique de données avec plusieurs canaux de transmission de longueur d'onde différente, une propriété physique des canaux de transmission optique étant fonction de la longueur d'onde et la qualité de transmission des canaux de transmission étant fonction de la longueur d'onde, comprenant un émetteur (100) pouvant être commandé pour la génération d'un signal optique, un récepteur (200) pouvant être commandé pour la réception du signal optique, l'émetteur (100) pouvant être commandé étant relié au récepteur (200) pouvant être commandé par l'intermédiaire des canaux de transmission optique,
des moyens de surveillance (410, 420) pour la détermination de plusieurs valeurs, représentant respectivement une mesure pour la propriété physique de l'un des canaux de transmission optique à la longueur d'onde du canal de transmission respectif, et
une unité de commande (500) pour la commande de l'émetteur (100) et du récepteur (200), l'unité de commande (500) étant reliée à l'émetteur (100), au récepteur (200) et au moyen de surveillance (410, 420), l'unité de commande (500) étant conçue pour :
- la fourniture d'au moins deux canaux de données à débit de données prédéterminé,
- l'identification de la qualité de transmission attendue des canaux de transmission en fonction de la valeur déterminée du canal de transmission respectif,
- le réglage automatique des paramètres de transmission des canaux de transmission en fonction de la valeur déterminée du canal de transmission respectif, et
- l'affectation des canaux de données aux canaux de transmission avec un débit de données des canaux de données décroissant et une qualité de transmission des canaux de transmission décroissante, en commençant par le canal de données ayant le débit de données le plus élevés et le canal de transmission ayant la qualité de transmission la plus élevée.

7. Système selon la revendication 6, dans lequel le canal de transmission optique présente une fibre optique (320) et le moyen de surveillance comprend un moniteur à fibres (420) pour la détermination de la dispersion résiduelle, de la pente de dispersion résiduelle, du temps de propagation de groupe différentiel (DGD) et/ou de la distance optique signal/bruit (OSNR) de la fibre optique.

8. Système selon la revendication 6, dans lequel le moyen de surveillance comprend un moniteur à signaux (410) pour la détermination d'un taux d'erreur binaire, d'un facteur Q, de l'ouverture d'un diagramme en oeil et/ou d'un degré de polarisation.

9. Système selon la revendication 6, dans lequel l'unité de commande (500) comprend un microprocesseur et une unité de mémoire.
